# EUROPÄISCHE PATENTANMELDUNG

(11) **EP 4 303 986 A2**
(43) Veröffentlichungstag der Anmeldung: **10.01.2024**
(21) Anmeldenummer: 23173659.6
(22) Anmeldetag: 16.05.2023
(51) Int. Cl.: H01M 10/613, H01M 10/625, H01M 10/655

(54) **ENERGIESPEICHERVORRICHTUNG ZUR SPEICHERUNG ELEKTRISCHER ENERGIE, VORZUGSWEISE FÜR EIN ZUMINDEST TEILWEISE ELEKTRISCH ANGETRIEBENES FAHRZEUG**

(30) Priorität: 24.06.2022 DE 102022115818
(71) Anmelder: MAN Truck & Bus SE, 80995 München (DE)
(72) Erfinder: Wengert, Jochen, 80995 München (DE); Kratzer, Sebastian, 80995 München (DE)
(74) Vertreter: v. Bezold & Partner Patentanwälte - PartG mbB

(57) **Zusammenfassung**

Die Erfindung betrifft eine Energiespeichervorrichtung (1) zur Speicherung elektrischer Energie, vorzugsweise für ein zumindest teilweise elektrisch angetriebenes Fahrzeug.

Die Energiespeichervorrichtung weist einen Batteriezellenstapel (3) aus einer Mehrzahl von in Stapelrichtung (S) stapelartig hintereinander angeordneten Speicherzellen (4) auf.

Die Energiespeichervorrichtung weist ferner eine unterhalb des Batteriezellenstapels (3) angeordnete Kühlplatte (8), auf der die Speicherzellen (4) zur Temperierung, vorzugsweise zur Kühlung, angeordnet sind.

Die Energiespeichervorrichtung weist mehrere Zwischenelemente (2) auf, die jeweils in Bezug auf die Stapelrichtung (S) zwischen zwei benachbarten Speicherzellen (4) angeordnet sind. Die Zwischenelemente (2) weisen jeweils zwei äußere Lagen (5, 6) und eine in Bezug auf die Stapelrichtung (S) zwischen den äußeren Lagen (5, 6) angeordnete innere Lage (7) zur Temperierung der benachbarten Speicherzellen (4) auf. Die äußeren Lagen (5, 6) weisen eine niedrigere Wärmeleitfähigkeit auf als die innere Lage (7).

Die innere Lage (7) ist mit der Kühlplatte (8) thermisch gekoppelt.

## Beschreibung

Die Erfindung betrifft eine Energiespeichervorrichtung zur Speicherung elektrischer Energie, vorzugsweise für ein zumindest teilweise elektrisch angetriebenes Fahrzeug. Die Erfindung betrifft ferner ein Fahrzeug, vorzugsweise Nutzfahrzeug, umfassend eine Energiespeichervorrichtung.

Aus der Praxis bekannte Fahrzeugbatterien, wie sie z. B. als Energiespeicher bzw. als Traktionsbatterie in Hybridfahrzeugen oder Elektrofahrzeugen zum Einsatz kommen, verfügen typischerweise über ein oder mehrere Batteriezellenstapel, in dem mehrere stapelartig angeordnete Batterie-Speicherzellen angeordnet sind.

Um einen ordnungsgemäßen Betrieb sicherzustellen und eine Beschädigung einer solchen Fahrzeugbatterie zu vermeiden sowie um eine möglichst lange Lebensdauer zu erreichen, muss diese zudem in einem definierten Temperaturbereich betrieben werden. Hier ist es aus dem Stand der Technik beispielsweise bekannt, unterhalb der Batteriezellen eine Kühlplatte anzuordnen, die von einem Kühlfluid durchströmt wird, um die Batteriezellen zu kühlen. In diesen bekannten Lösungen wird typischerweise die flächenmäßig wesentlich kleinere, der Kühlplatte zugewandte Zellunterseite der Speicherzellen stärker gekühlt, als die flächenmäßig wesentlich größeren Seitenflächen der Speicherzellen. Es ergibt sich nachteilhaft eine inhomogene Temperaturverteilung innerhalb der Speicherzellen und innerhalb des Batteriezellenstapels.

Deswegen ist es aus der Praxis bekannt, zwischen den Batteriezellen Kühlelemente, bspw. Kühlfinnen anzuordnen, über die die wesentlich größeren Seitenflächen der Speicherzellen gekühlt werden können. Diese Kühlelemente sind meist aus einem homogenen Material ausgeführt, das zur Erfüllung ihrer Funktion meist eine hohe Wärmeleitfähigkeit aufweist. Insbesondere im Falle eines thermischen Durchgehens (engl. "thermal runaway", worunter eine Überhitzung einer Speicherzelle aufgrund eines sich selbst verstärkenden, Wärme produzierenden Prozesses zu verstehen ist) einer der Speicherzellen, erweist sich dies jedoch als nachteilig, denn aufgrund der hohen Wärmeleitfähigkeit des zwischen den Speicherzellen angeordneten Kühlelements kann die beim thermischen Durchgehen entstehende Wärme an benachbarte Zellen übertragen werden und diese schädigen.

Die Aufgabe der vorliegenden Erfindung ist es, eine Technik zur Temperierung, insbesondere zur Kühlung, von derartigen Energiespeichervorrichtungen bereitzustellen, mit der Nachteile bekannter Ansätze vermieden werden können, insbesondere vor dem Hintergrund eines thermischen Durchgehens der Speicherzellen.

Diese Aufgaben werden durch eine Energiespeichervorrichtung mit den Merkmalen des unabhängigen Anspruchs gelöst. Vorteilhafte Weiterbildungen sind in den abhängigen Ansprüchen und der Beschreibung angegeben.

Der Grundgedanke der Erfindung liegt darin, zwischen zwei benachbarten Speicherzellen ein Zwischenelement anzuordnen, welches mehrlagig ausgeführt ist, nämlich mit einer inneren Lage zur Temperierung, vorzugsweise Kühlung, der Speicherzellenseitenflächen, die an einen Kühlkörper thermisch angebunden ist und zwei äußeren Lagen, die eine niedrigere Wärmeleitfähigkeit aufweisen als die innere Lage. Dadurch wird die Seitenflächenkühlung verbessert, indem ein Wärmestrom zur Temperierung der Speicherzellen von der Speicherzelle, über die innere Lage und den Kühlkörper ermöglicht wird, wobei der Wärmestrom jeweils nur eine der äußeren Schichten passieren muss. Eine Wärmefluss zwischen zwei benachbarten Speicherzellen müsste jedoch beide äußeren Lagen passieren, was durch die niedrigere Wärmeleitfähigkeit erschwert wird. Dadurch wird die Wärmeübertragung zwischen diesen benachbarten Speicherzellen, bspw. im Falle eines thermischen Durchgehens (sog. "thermal runaway") einer der Speicherzellen, gemindert.

Gemäß einem ersten allgemeinen Gesichtspunkt der Erfindung wird entsprechend eine Energiespeichervorrichtung zur Speicherung elektrischer Energie bereitgestellt. Vorzugsweise handelt es sich um eine Energiespeichervorrichtung für ein zumindest teilweise elektrisch angetriebenes Fahrzeug.

Die Energiespeichervorrichtung weist einen Batteriezellenstapel aus einer Mehrzahl von stapelartig in Stapelrichtung hintereinander angeordneten Speicherzellen auf. Die Energiespeichervorrichtung weist ferner mehrere Zwischenelemente auf. Diese Zwischenelemente sind jeweils in Bezug auf die Stapelrichtung zwischen zwei benachbarten Speicherzellen angeordnet. Die Zwischenelemente weisen jeweils zwei äußere Lagen und eine innere Lage auf. Die Zwischenelemente weisen somit jeweils einen mehrlagigen Aufbau auf. Die innere Lage ist in Bezug auf die Stapelrichtung zwischen den äußeren Lagen angeordnet. Die äußeren Lagen weisen eine niedrigere Wärmeleitfähigkeit auf als die innere Lage. Die Energiespeichervorrichtung weist ferner eine unterhalb des Batteriezellenstapels angeordnete Kühlplatte auf. Auf der Kühlplatte sind die Speicherzellen zur Temperierung, vorzugsweise zur Kühlung, angeordnet. Die innere Lage ist mit der Kühlplatte thermisch gekoppelt.

Das Zwischenelement vereint somit unterschiedliche Funktionen in einer Komponente. Das Zwischenelement dient dazu, benachbarte Speicherzellen baulich voneinander zu trennen und eine Verspannung der Zellen untereinander sicherzustellen bzw. zu ermöglichen. Das Zwischenelement verbessert ferner die Kühlung der Speicherzellen, reduziert gleichzeitig aber das Risiko, dass sich im Falle eines "Thermal Runaways" einer Batteriezelle die anderen Batteriezellen durch die Abwärme der beschädigten Zelle ebenfalls zum "Runaway" gebracht werden.

Die vorgeschlagene Energiespeichervorrichtung birgt gegenüber den bekannten Lösungen entsprechend mehrere Vorteile. Zum einen sind die Speicherzellen nicht nur von unten über die Kühlplatte, sondern auch über deren Seitenflächen über die innere Lage temperierbar, insbesondere kühlbar. Dies ermöglicht eine homogenere Kühlung der Speicherzellen als eine reine Bodenkühlung, sodass die Speicherzellen zuverlässiger in einem vorbestimmten Temperaturbereich betrieben werden können, was deren Lebensdauer verlängert. Zum anderen wird die Wärmeübertragung der Speicherzellen untereinander gemindert, was schon im Normalbetrieb, insbesondere aber im Falle eines thermischen Durchgehens vorteilhaft ist, da die beim thermischen Durchgehen in der betroffenen Speicherzelle entstehende Wärme dann nicht oder nur weniger stark auf weitere, nicht betroffene Speicherzellen übertragen wird. Das Risiko einer Schädigung der nicht betroffenen Speicherzellen durch die beim thermischen Durchgehen der betroffenen Speicherzelle entstehende Wärme wird dadurch reduziert.

Die Speicherzellen und die Zwischenelemente können sandwichartig oder in Sandwich-Form aneinander angeordnet sein. In anderen Worten können die Zwischenelemente jeweils in einem zwischen zwei benachbarten Speicherzellen gebildeten Zwischenraum angeordnet sein.

Eine niedrigere Wärmeleitfähigkeit der äußeren Lagen im Vergleich zu der inneren Lage kann sich bspw. aufgrund ihres jeweiligen Materials ergeben.

Die innere Lage kann an der Kühlplatte befestigt sein, beispielsweise in dem ein der Kühlplatte zugewandter Endbereich der inneren Lage die Kühlplatte kontaktiert. Die innere Lage kann z. B. an die Kühlplatte gelötet sein. Es ist jedoch auch eine andere Art der Befestigung denkbar wie bspw. Schrauben, Kleben, Formschluss etc.. Dies stellt eine technisch einfach umzusetzende und gleichzeitig effektive Art der thermischen Kopplung der inneren Schicht mit der Kühlplatte dar.

Alternativ oder ergänzend kann ein der Kühlplatte zugewandter Endbereich der äußeren Lagen beabstandet zur Kühlplatte angeordnet sein. Dadurch wird eine Reduzierung der Wärmeübertragung zwischen Kühlplatte und äußeren Schichten erreicht. Die Energiespeichervorrichtung kann zwischen der Kühlplatte und einem der Kühlplatte zugewandten Endbereich der äußeren Lagen einen Luftspalt aufweisen. Da Luft ein relativ schlechter Wärmeleiter ist, erfolgt auf diese Weise eine thermische Entkopplung der äußeren Lagen von der Kühlplatte.

Gemäß einem weiteren Aspekt kann die innere Lage ein erstes Material aufweisen, das ein Metall ist. Vorzugsweise ist das erste Material Kupfer, Aluminium oder Stahl. Metallwerkstoffe eignen sich aufgrund ihrer hohen Wärmeleitfähigkeit besonders als Material für die innere Lage. Die innere Lage kann beispielsweise als Kühlblech und oder Kühlfinne ausgeführt sein.

Alternativ oder ergänzend kann die äußere Lage ein zweites Material aufweisen, das ein Kunststoff, ein Gel, ein Aerogel oder Gummi ist. Unter dem Begriff "Aerogel" werden hier hochporöse Festkörper verstanden. Bspw. können bis zu 95% ihres Volumens aus Poren bestehen. Denkbar sind verschiedene Arten von Aerogelen, bspw. solche auf Silikatbasis, auf Kunststoff- oder Kohlenstoffbasis. Die genannten Materialien zeichnen sich durch ihre besonders niedrige Wärmeleitfähigkeit aus und sind deswegen für den Einsatz als Material der äußeren Lagen besonders geeignet.

Alternativ oder ergänzend können die äußeren Lagen kompressibel, elastisch und/oder verformbar ausgebildet sein. Die äußeren Lagen können hierzu aus einem kompressiblen, elastischen und/oder verformbaren Material gebildet sein. Vorzugsweise sind die äußeren Lagen zur Aufnahme von Spannkräften zur Druckentlastung bei einer alterungsbedingten Ausdehnung der Speicherzellen und/oder Verspannung bei der Herstellung des Batteriezellenstapels ausgebildet.

Gemäß einem weiteren Aspekt können die äußeren Lagen aus einem elektrisch isolierenden Material zur elektrischen Isolierung der benachbarten Speicherzellen ausgebildet sein. Die äußeren Lagen können z. B. eine Matte oder ein Kissen, insbesondere eine Elastomermatte oder ein Elastomerkissen, zum Beispiel aus einem TIM-Material (Englisch: Thermal Interface Material), sein. Dadurch kann, neben der niedrigeren Wärmeleitfähigkeit, auch eine gewisse Kompressibilität des Batteriezellenstapels erreicht werden, was insbesondere im Falle einer alterungsbedingten Ausdehnung (sog. "Zell-Swelling") der Speicherzellen vorteilhaft ist.

Gemäß einem weiteren Aspekt können die Zwischenelemente an ihren, sich in Stapelrichtung gegenüberliegenden Außenflächen an sich zugewandten Seiten der benachbarten Speicherzellen anliegen. Dadurch werden die Speicherzellen besonders effektiv temperiert, insbesondere gekühlt.

Gemäß einem weiteren Aspekt können die Zwischenelemente jeweils einen mehrlagigen Aufbau aufweisen, der, in Stapelrichtung gesehen, spiegelsymmetrisch ausgebildet ist. Beispielsweise können die Zwischenelemente bezüglich einer senkrecht zur Stapelrichtung sehenden, imaginären Ebene einen spiegelsymmetrischen Aufbau aufweisen. Beispielsweise können die Zwischenelemente eine innere Lage aufweisen, an der auf beiden sich in Stapelrichtung gegenüberliegenden Seiten eine äußere Lage derselben Dicke in Stapelrichtung angeordnet ist. Dies zieht eine besonders gleichmäßige Wärmeverteilung im Batteriezellenstapel nach sich, was sich positiv auf die Lebensdauer der Speicherzellen auswirkt.

Gemäß einem weiteren Aspekt können die äußeren Lagen selbst einen mehrlagigen Aufbau aufweisen. In anderen Worten ist denkbar, dass die Zwischenelemente mehrere Lagen mit einer niedrigeren Wärmeleitfähigkeit als andere Lagen der Zwischenelemente aufweisen. Das Vorhandensein mehrerer thermischer Grenzschichten im Wärmestrom verringert den übertragenen Wärmestrom in vorteilhafter Weise.

Alternativ oder ergänzend kann die innere Lage selbst einen mehrlagigen Aufbau aufweisen. In anderen Worten ist denkbar, dass die Zwischenelemente mehrere Lagen mit einer höheren Wärmeleitfähigkeit als andere Lagen der Zwischenelemente aufweisen.

Denkbar ist bspw.,dass die Lagen mit niedrigerer Wärmeleitfähigkeit in Stapelrichtung alternierend zu den Lagen mit höherer Wärmeleitfähigkeit angeordnet sind. Denkbar ist aber auch, dass mehrere Lagen niedrigerer Wärmeleitfähigkeit in Stapelrichtung nebeneinander angeordnet sind und mehrere Lagen höherer Wärmeleitfähigkeit in Stapelrichtung nebeneinander angeordnet sind. Ferner sind andere und/oder unregelmäßige Abfolgen aus Lagen mit niedrigerer Wärmeleitfähigkeit und Lagen mit dazu im Vergleich höherer Wärmeleitfähigkeit möglich. Die Lagen können jeweils in Stapelrichtung unterschiedlich dick ausgeführt sein.

Gemäß einem weiteren Aspekt kann die Energiespeichervorrichtung zwischen allen benachbarten Speicherzellen jeweils eines der Zwischenelemente aufweisen. Dadurch wird der Wärmestrom zwischen allen Speicherzellen gemindert, was die Speicherzellen thermisch voneinander abkoppelt und die Sicherheit, insbesondere im Falle eines thermischen Durchgehens einer der Speicherzellen weiter erhöht.

Ferner kann die Energiespeichervorrichtung die Zwischenlagen nur in jedem zweiten, dritten oder vierten, etc. durch benachbarte Speicherzellen gebildeten Zwischenraum aufweisen.

Gemäß einem weiteren Aspekt können die Speicherzellen als prismatische Speicherzellen oder Pouch-Speicherzellen ausgebildet sein.

Die Energiespeichervorrichtung kann in an sich bekannter Weise dazu ausgebildet sein, elektrische Energie zu speichern, die in entsprechenden Antriebskomponenten des Fahrzeugs, z. B. in einer E-Maschine, in Antriebsenergie gewandelt werden kann. Anders ausgedrückt kann die Energiespeichervorrichtung zur temporären Aufnahme von Traktionsenergie ausgebildet sein. Die Kühlplatte kann bspw. als Fluidführungskanäle aufweisende, mit einem Kühlmittel durchströmbare Kühlplatte ausgeführt sein. Zwischen Speicherzellen und Kühlplatte kann zur Erhöhung der Wärmeleitfähigkeit eine Wärmeleitpaste angeordnet sein.

Die Erfindung betrifft ferner ein Fahrzeug, vorzugsweise Nutzfahrzeug, aufweisend die Energiespeichervorrichtung wie vorstehend beschrieben.

Das Fahrzeug ist vorzugsweise zumindest teilweise elektrisch angetrieben. Vorzugsweise handelt es sich bei dem Fahrzeug um ein Kraftfahrzeug, beispielsweise um einen Personenkraftwagen (PKW) oder um ein Nutzfahrzeug. In letztgenanntem Fall kann es sich bei dem Fahrzeug mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und oder einen Sattelzug handeln, der zumindest teilweise elektrisch angetrieben ist. Es ist jedoch auch denkbar, dass das Fahrzeug ein Schienenfahrzeug oder Flugzeug ist.

Die zuvor beschriebenen bevorzugten Ausführungsformen und Merkmale der Erfindung sind beliebig miteinander kombinierbar.

Einzelheiten und Vorteile der Erfindung werden im Folgenden unter Bezug auf die beigefügte Zeichnung beschrieben. Es zeigen:
- Figur 1: eine Energiespeichervorrichtung gemäß einer Ausführungsform der Erfindung in Schnittdarstellung (Teilansicht);
- Figur 2: eine Energiespeichervorrichtung gemäß einer weiteren Ausführungsform der Erfindung in Schnittdarstellung (Teilansicht);
- Figur 3: eine Energiespeichervorrichtung gemäß einer Ausführungsform der Erfindung in Schnittdarstellung (Teilansicht).

Gleiche oder funktional äquivalente Elemente sind in allen Figuren mit denselben Bezugszeichen bezeichnet und sind zum Teil nicht gesondert beschrieben.

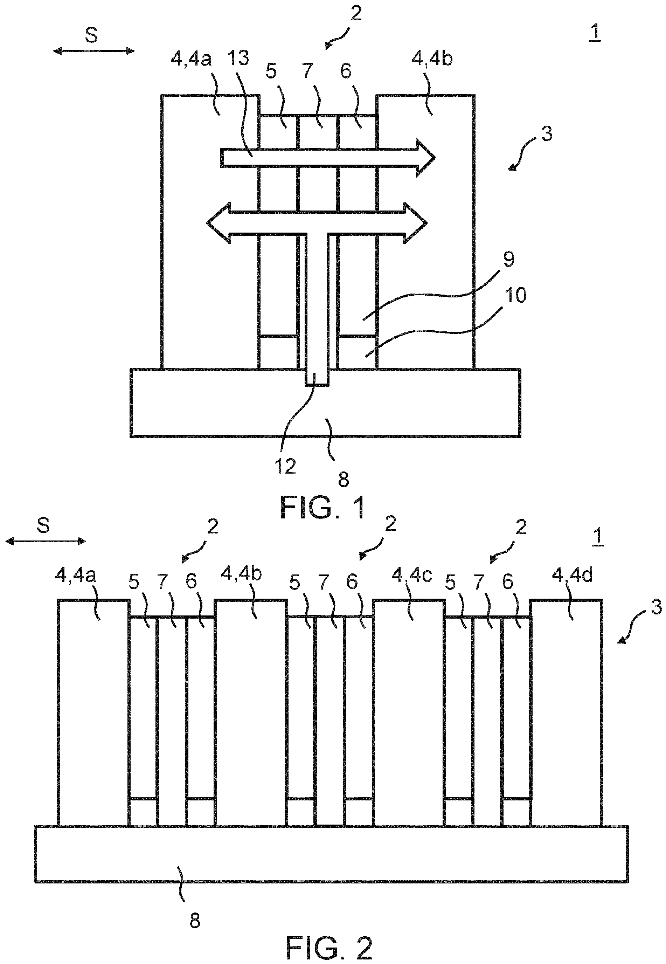

Figur 1 zeigt eine Energiespeichervorrichtung 1 zur Speicherung elektrischer Energie für ein zumindest teilweise elektrisch angetriebenes Fahrzeug (nicht dargestellt) gemäß einer Ausführungsform der Erfindung in Schnittdarstellung.

Die Energiespeichervorrichtung 1 weist einen Batteriezellenstapel 3 aus einer Mehrzahl von in Stapelrichtung S stapelartig hintereinander angeordneten Speicherzellen 4 auf, von denen zugunsten der besseren Übersichtlichkeit nur zwei dargestellt sind. Zur besseren Verständlichkeit der nachfolgenden Ausführungen sind in dieser Darstellung die linke Speicherzelle mit den Bezugszeichen 4,4a und die rechte Speicherzelle mit den Bezugszeichen 4,4b bezeichnet.

Die Speicherzellen 4,4a,4b sind im gezeigten Ausführungsbeispiel als prismatische Speicherzellen ausgeführt, können jedoch auch als Pouch-Speicherzellen ausgeführt sein.

Die Energiespeichervorrichtung 1 weist mehrere Zwischenelemente 2 auf, von denen zugunsten der besseren Übersichtlichkeit nur eines dargestellt ist. Das Zwischenelement 2 ist in Bezug auf die Stapelrichtung S zwischen zwei benachbarten Speicherzellen 4 angeordnet, nämlich zwischen Speicherzelle 4,4a und Speicherzelle 4,4b. Das Zwischenelement 2 weist einen mehrlagigen Aufbau auf. Das Zwischenelement 2 weist zwei äußere Lagen 5,6 und eine in Bezug auf die Stapelrichtung S zwischen den äußeren Lagen 5,6 angeordnete innere Lage 7 auf. Die äußeren Lagen 5, 6 weisen eine niedrigere Wärmeleitfähigkeit als die innere Lage 7 auf. Die innere Lage 7 ist zur Temperierung, vorzugsweise zur Kühlung, der benachbarten Speicherzellen 4,4a,4b ausgebildet. Dazu kann sie Wärme, vorzugsweise Kühlleistung von einer unterhalb des Batteriezellenstapels 3 angeordneten Kühlplatte 8 an die Speicherzellen 8 übertragen, wie später beschrieben wird.

Die Speicherzellen 4,4a,4b sind zur Temperierung, vorzugsweise zur Kühlung, auf der Kühlplatte 8 angeordnet. Auf die Kühlplatte 8 ist im vorliegenden Ausführungsbeispiel eine Wärmeleitpaste (nicht dargestellt) aufgetragen. Die Speicherzellen 4,4a,4b sind thermisch mit der Kühlplatte 8 gekoppelt. Die innere Lage 7 ist ebenfalls thermisch gekoppelt. Im gezeigten Ausführungsbeispiel ist die innere Lage 7 an der Kühlplatte 8 durch Löten befestigt.

Zur thermischen Entkopplung der äußeren Lagen 5,6 von der Kühlplatte 8 ist jeweils ein der Kühlplatte 8 zugewandter Endbereich 9 der äußeren Lagen 5,6 beabstandet zur Kühlplatte 8 angeordnet. Ferner weist die Energiespeichervorrichtung 1 zwischen der Kühlplatte 8 und einem der Kühlplatte 8 zugewandten Endbereich 9 der äußeren Lagen 5,6 einen Luftspalt 10 auf.

Das Zwischenelement 2 liegt an seinen, sich in Stapelrichtung S gegenüberliegenden Außenflächen an sich zugewandten Seiten der benachbarten Speicherzellen 4 an. Der mehrlagige Aufbau des Zwischenelements 2 ist, in Stapelrichtung S gesehen, spiegelsymmetrisch ausgebildet.

Die innere Lage 7 ist aus Metall gefertigt, beispielsweise Kupfer, Aluminium oder Stahl.

Im gezeigten Ausführungsbeispiel sind die äußeren Lagen aus Aerogel gefertigt, das aufgrund seiner relativ hohen Porosität ein schlechter thermischer Leiter ist. Die äußeren Lagen 5,6 weisen damit eine im Vergleich zur inneren Lage 7 niedrigere Wärmeleitfähigkeit auf. Ein weiteres mögliches Material für die äußeren Lagen ist z. B. Gummi.

Um die Speicherzellen 4,4a,4b in einem vorbestimmten Temperaturbereich betreiben zu können, wird über die Kühlplatte 8 Kühlleistung bereitgestellt und den Speicherzellen 4,4a,4b von unten, d. h. von der der Kühlplatte zugewandten Seite her, zugeführt. Dazu wird die Kühlplatte 8 im gezeigten Ausführungsbeispiel mit einem Kühlmittel durchströmt (nicht dargestellt). Die Kühlleistung wird aufgrund der thermischen Kopplung der Kühlplatte 8 mit der inneren Lage 7 von der Kühlplatte 8 auf die innere Lage 7, dann auf jeweils auf eine der äußeren Lagen 5, 6 und letztlich auf jeweils eine der benachbarten Speicherzellen 4,4a,4b übertragen, was durch den Wärmestrom 12 schematisiert dargestellt ist. In anderen Worten fließt der Wärmestrom 12 von der Kühlplatte 8 über die innere Lage 7, teilt sich in zwei Wärmeströme auf, wovon einer über die äußere Schicht 5 zur Speicherzelle 4,4a und einer über die äußere Schicht 6 zur Speicherzelle 4,4b fließt. Dadurch werden auch die Seitenflächen der Speicherzellen 4,4a,4b gekühlt.

Bei einem thermischen Durchgehen einer der Speicherzellen 4,4a,4b kann ferner ein unerwünscht hoher Wärmeübertrag zwischen den Speicherzellen drohen.

Im gezeigten Ausführungsbeispiel ist die linke Speicherzelle 4,4a während des thermischen Durchgehens gezeigt. In der exothermen Reaktion entsteht Abwärme, die die benachbarte Speicherzelle 4,4b schädigen kann. Da die Zwischenlage 2 erfindungsgemäß zumindest zwei äußere Lagen aufweist, muss der Wärmestrom 13 zwischen den beiden benachbarten Speicherzellen 4,4a,4b, der in Figur 1 schematisiert dargestellt ist, im Gegensatz zum Wärmestrom 12 zumindest zwei, und nicht nur eine, der äußeren Lagen 5,6 passieren. Da diese äußeren Lagen 5,6 eine niedrigere Wärmeleitfähigkeit aufweisen als die innere Lage 7, wird der Wärmestrom 13 zwischen benachbarten Speicherzellen im gezeigten Ausführungsbeispiel derart gemindert, dass die rechte Speicherzelle 4,4b in der Regel nicht geschädigt wird. Dadurch kann bspw. auch eine Kettenreaktion im Sinne eines dadurch ausgelösten thermischen Durchgehens der rechten Speicherzelle 4,4b besser verhindert werden.

Figur 2 zeigt eine weitere Ausführungsform der Energiespeichervorrichtung 1 in Schnittdarstellung. Zur besseren Verständlichkeit der nachfolgenden Ausführungen sind die Speicherzellen mit den unterschiedlichen Bezugszeichen 4a-d versehen.

Wie aus der Figur 2 ersichtlich ist, ist ein Zwischenelement 2 zwischen den benachbarten Speicherzellen 4,4a und 4,4b, ein Zwischenelement 2 zwischen den benachbarten Speicherzellen 4,4b und 4,4c und ein Zwischenelement 2 zwischen den benachbarten Speicherzellen 4,4c und 4,4d angeordnet. In anderen Worten weist die Energiespeichervorrichtung 1 zwischen allen benachbarten Speicherzellen 4,4a-d jeweils eines der Zwischenelemente 2 auf. Exemplarisch sind hier drei Zwischenelemente 2 dargestellt.

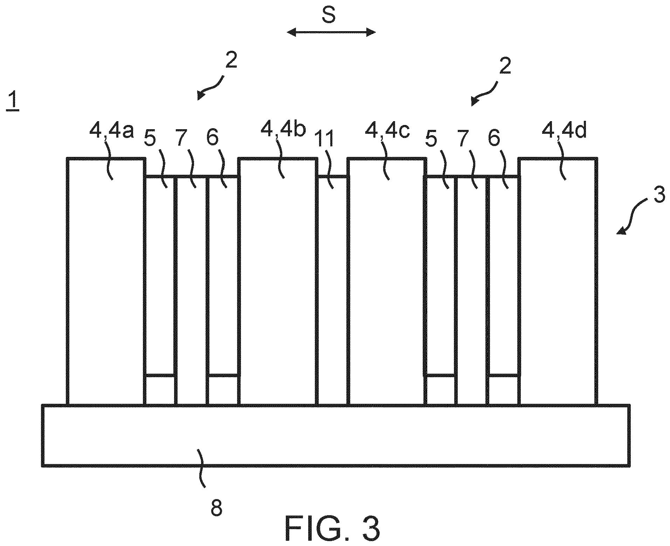

Figur 3 zeigt eine weitere Ausführungsform der Energiespeichervorrichtung 1 in Schnittdarstellung.

Im Unterschied zur Ausführungsform der Figur 2 weist die Energiespeichervorrichtung 1 nur zwischen den benachbarten Speicherzellen 4,4a und 4,4b sowie zwischen den benachbarten Speicherzellen 4,4c und 4,4d jeweils ein Zwischenelement 2 auf. Zwischen den benachbarten Speicherzellen 4,4b und 4,4c ist dagegen eine herkömmliche Kompressionslage 11 angeordnet (sog. "gap pad", "swelling pad" oder "compression pad"). Die Kompressionslage 11 ist in an sich bekannter Weise zur Aufnahme sich im Batteriezellenstapel aufgrund einer alterungsbedingten Ausdehnung der Speicherzellen einstellender Spannkräfte kompressibel ausgeführt. Die Kompressionslage 11 weist dazu ein kompressibles Material, bspw. Schaumstoff, auf. Die Kompressionslage 11 kann dabei z. B. eine Matte oder ein Kissen, insbesondere eine Elastomermatte oder ein Elastomerkissen, zum Beispiel aus einem TIM-Material (Englisch: Thermal Interface Material), sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Energiespeichervorrichtung
- 2: Zwischenelement
- 3: Batteriezellenstapel
- 4, 4a-d: Speicherzelle
- 5, 6: äußere Lage
- 7: innere Lage
- 8: Kühlplatte
- 9: Endbereich der äußeren Lage
- 10: Luftspalt
- 11: Kompressionslage ("gap pad")
- 12: Wärmestrom zwischen der Kühlplatte und den Speicherzellen
- 13: Wärmestrom zwischen benachbarten Speicherzellen

## Patentansprüche

1. Energiespeichervorrichtung (1) zur Speicherung elektrischer Energie, vorzugsweise für ein zumindest teilweise elektrisch angetriebenes Fahrzeug, aufweisend
a) einen Batteriezellenstapel (3) aus einer Mehrzahl von in Stapelrichtung (S) stapelartig hintereinander angeordneten Speicherzellen (4);
b) eine unterhalb des Batteriezellenstapels (3) angeordnete Kühlplatte (8), auf der die Speicherzellen (4) zur Temperierung, vorzugsweise zur Kühlung, angeordnet sind; und
c) mehrere Zwischenelemente (2), die jeweils in Bezug auf die Stapelrichtung (S) zwischen zwei benachbarten Speicherzellen (4) angeordnet sind, wobei die Zwischenelemente (2) jeweils zwei äußere Lagen (5, 6) und eine in Bezug auf die Stapelrichtung (S) zwischen den äußeren Lagen (5, 6) angeordnete innere Lage (7) aufweisen, wobei die innere Lage (7) thermisch mit der Kühlplatte gekoppelt ist und die äußeren Lagen (5, 6) eine niedrigere Wärmeleitfähigkeit aufweisen als die innere Lage (7).

2. Energiespeichervorrichtung (1) nach Anspruch 1, wobei
a) die innere Lage (7) an der Kühlplatte (8) befestigt, vorzugsweise an die Kühlplatte (8) gelötet, ist, und/oder
b) ein der Kühlplatte (8) zugewandter Endbereich (9) der äußeren Lagen (5, 6) beabstandet zur Kühlplatte angeordnet ist und ein der Kühlplatte zugewandter Endbereich der inneren Lage (7) die Kühlplatte kontaktiert, und/oder
c) die Energiespeichervorrichtung (1) zwischen der Kühlplatte (8) und einem der Kühlplatte (8) zugewandten Endbereich (9) der äußeren Lagen (5, 6) einen Luftspalt (10) aufweist.

3. Energiespeichervorrichtung (1) nach einem der vorhergehenden Ansprüche, wobei
a) die innere Lage (7) ein erstes Material aufweist, das ein Metall ist, vorzugsweise Kupfer, Aluminium oder Stahl, und/oder
b) die äußeren Lagen (5, 6) ein zweites Material aufweisen, das ein Kunststoff, ein Gel, z.B. ein Aerogel oder Gummi ist und/oder ein elektrisch isolierendes Material ist.

4. Energiespeichervorrichtung (1) nach einem der vorhergehenden Ansprüche, wobei die äu-βeren Lagen (5, 6) kompressibel, elastisch und/oder verformbar ausgebildet sind, vorzugsweise zur Aufnahme von Spannkräften zur Verspannung des Batteriezellenstapels (3).

5. Energiespeichervorrichtung (1) nach einem der vorhergehenden Ansprüche, wobei die Zwischenelemente (2) jeweils an ihren, sich in Stapelrichtung (S) gegenüberliegenden Außenflächen an benachbarten Speicherzellen (4) anliegen.

6. Energiespeichervorrichtung (1) nach einem der vorhergehenden Ansprüche, wobei die Zwischenelemente (2) jeweils einen mehrlagigen Aufbau aufweisen, der, in Stapelrichtung (S) gesehen, spiegelsymmetrisch ausgebildet ist.

7. Energiespeichervorrichtung (1) nach einem der vorhergehenden Ansprüche, wobei
a) die äußeren Lagen (5, 6) selbst einen mehrlagigen Aufbau aufweisen, und/oder
b) die innere Lage (7) selbst einen mehrlagigen Aufbau aufweist.

8. Energiespeichervorrichtung (1) nach einem der vorhergehenden Ansprüche, die zwischen allen benachbarten Speicherzellen (4) jeweils eines der Zwischenelemente (2) aufweist.

9. Energiespeichervorrichtung (1) nach einem der vorhergehenden Ansprüche, wobei die Speicherzellen (4) als prismatische Speicherzellen oder Pouch-Speicherzellen ausgebildet sind.

10. Fahrzeug, vorzugsweise Nutzfahrzeug, aufweisend die Energiespeichervorrichtung (1) nach einem der vorhergehenden Ansprüche.
